# FASCICULE DE BREVET EUROPEEN

(11) **EP 2 070 232 B1**
(45) Date de publication et mention de la délivrance du brevet: **01.07.2015**
(21) Numéro de dépôt: 07848313.8
(22) Date de dépôt: 03.10.2007
(51) Int. Cl.: H04J 3/16, H04J 3/06, H04J 3/07

(54) **TRANSMISSION D'UN AFFLUENT EN MODE SYNCHRONE AU NIVEAU D'UNE LIAISON D'UN RÉSEAU DE DONNÉES**
ÜBERTRAGUNG EINES NEBENELEMENTS IN SYNCHRONMODUS AUF DER EBENE EINER VERKNÜPFUNG EINES DATENNETZWERKS
TRANSMISSION OF A TRIBUTARY IN SYNCHRONOUS MODE AT THE LEVEL OF A LINK OF A DATA NETWORK

(30) Priorité: 03.10.2006 FR 0608662
(43) Date de publication de la demande: 17.06.2009
(73) Titulaire: Ekinops, 22300 Lannion (FR)
(72) Inventeur: PAMART, Jean-Luc, F-22560 Pleumeur-Bodou (FR); OLLIVIER, François-Xavier, F-22300 Lannion (FR)
(74) Mandataire: Novagraaf Technologies
(86) Numéro de dépôt international: PCT/FR2007/001616
(87) Numéro de publication internationale: WO 2008/040881

(56) Documents cités:
- EP-A- 1 043 856
- EP-A- 1 246 383
- DE-C1- 19 518 205
- WRIGHT M: "T1X1.5/99-103. A proposal for a Rate-Preserving OCh Overhead Approach" INTERNET CITATION, [Online] 12 janvier 1999 (1999-01-12), XP002150709 Extrait de l'Internet: URL:http://www.t1.org/filemgr/filesearch.t af?_function=detail&T1_Files_ui d1=9X151030&_UserReference=69BD85D55282651 139F038A3> [extrait le 2000-10-20]

## Description

La présente invention concerne un procédé de transmission d'un affluent en mode synchrone au niveau d'une liaison d'un réseau de données.

Les affluents correspondent à un flux de données reçu ou émis par un équipement au niveau d'une liaison dans un réseau de données.

La transmission d'un affluent en mode synchrone peut concerner un multiplexage par division temporelle qui consiste à grouper plusieurs affluents asynchrones à un premier débit sur un conteneur unique de plus haut débit afin de mutualiser une porteuse de transmission.

La transmission d'un affluent en mode synchrone peut également concerner un multiplexage inverse par division temporelle qui consiste à fragmenter un affluent sur plusieurs canaux de débits inférieurs qui seront réalignés ultérieurement pour recomposer l'affluent d'origine. Cette technique permet de faciliter le transport de signaux haut débit sur des canaux où la fréquence de propagation est limitante.

La transmission d'un affluent en mode synchrone concerne également la régénération d'un affluent qui consiste à transmettre un affluent au même débit.

Les flux synchrones sont soit des flux du type SDH, acronyme anglais pour « Synchronous Digital Hierarchy » signifiant hiérarchie numérique synchrone, soit des flux du type SONET, terme anglais pour « Synchronous Optical Network », signifiant réseau optique synchrone.

Alors que le concept SONET a été développé aux Etats-Unis, la hiérarchie SDH est l'objet notamment de la recommandation G.707 de l'UIT-T, acronyme pour Union Internationale des Télécommunications. La suite de la présente description sera relative à la hiérarchie SDH mais, comme les concepts SONET et SDH sont voisins, il est de la portée de l'homme du métier d'extrapoler ce qui sera dit relativement à la hiérarchie SDH au concept SONET.

L'avantage du mode de transfert synchrone tel qu'il est spécifié dans la hiérarchie SDH et dans le concept SONET réside dans la structure des trames utilisées qui est identique au travers de la hiérarchie et qui permet l'agrégation de flux différent par entrelacement après une adaptation de débit au moyen d'un pointeur mobile permettant d'identifier le début de la charge utile dans chaque conteneur de transport.

Pour plus de précisions concernant la hiérarchie SDH ou le concept SONET, on pourra notamment se reporter à la recommandation G707 mentionnée ci-dessus.

Les standards SDH ou SONET enseignent en particulier un procédé de transmission d'au moins un affluent en mode synchrone au niveau d'une liaison d'un réseau de données, ledit affluent comprenant au moins une trame au format SDH ou SONET, ladite trame comprenant au moins une zone d'enveloppe de charge utile et une zone de surdébit de transport, ladite zone d'enveloppe de charge utile comprenant au moins une charge utile et des données de supervision de charge liées à la charge utile, ladite zone de surdébit de transport comprenant au moins des données de supervision de transport liées au transport et des motifs fixes (A1, A2) permettant le verrouillage de ladite trame en réception, ledit procédé comprenant des étapes de:
- modification de ladite trame de sorte à générer une trame modifiée;
- transmission de ladite trame modifiée.

Lors d'une liaison sous forme de multiplexage à l'aide d'un multiplexeur dans le standard SDH ou SONET, les données de supervision comprises dans le champ de surdébit de transport de chaque affluent sont exploitées puis supprimées, puis remplacées par de nouvelles données de supervision correspondant à un signal de niveau supérieur dans la hiérarchie.

Ceci nécessite donc un ajustement de débit des trains affluents par modification du pointeur et de la position de début de charge utile dans la trame.

Lors de l'opération de multiplexage, la modification des pointeurs de chacun des affluents impacte le contenu du train et la position des charges utiles dans le conteneur de transport afin d'ajuster le débit des affluents au débit local du multiplexeur.

Ainsi le procédé de multiplexage décrit précédemment a l'inconvénient que les affluents ne sont pas réellement transmis avec un débit et un contenu fixe.

Ceci empêche notamment une transmission transparente des affluents dans le réseau et nuit au besoin d'intégrité du signal transmis manifesté par certains utilisateurs.

L'invention a notamment pour but de pallier cet inconvénient.

Pour maintenir un affluent de contenu rigoureusement identique lors de la transmission, on pourrait penser à considérer l'affluent lui-même comme une charge utile et à lui appliquer un surdébit permettant l'insertion de données de supervision.

Toutefois, ce surdébit rendrait la trame obtenu non compatible avec les standard SDH ou SONET, et donc rendrait impossible l'utilisation de l'invention sur des réseaux existants.

L'invention a donc pour but de permettre une transmission transparente d'un affluent en mode synchrone au niveau d'une liaison d'un réseau de données.

L'invention a également pour but de garantir l'égalité des fréquences en entrée et en sortie d'une liaison d'un réseau de données.

L'invention a également pour but de permettre une transmission transparente d'un affluent en mode synchrone au niveau d'une liaison d'un réseau de données, tout en maintenant une compatibilité avec les standards SDH ou SONET.

On connaît dans l'état de la technique le document EP-A-1264383. Ce document décrit un système de transmission par multiplexage de données sous forme de trames SDH ou SONET. Aux fins du multiplexage et d'adaptation du débit de transmission après multiplexage, une séquence de motifs fixes de trame est remplacée par une autre séquence d'adaptation de taille variable, la séquence pouvant comprendre des données de contrôle et d'administration.

Toutefois, dans le document précité, la cohérence du flux affluent en réception après multiplexage inverse n'est pas conservée.

L'invention vise également à pallier cet inconvénient.

Le document EP1043856 décrit un procédé et dispositif permettant d'inclure des renseignements supplémentaires en un signal numérique sans que le taux de transmission ne soit augmenté.

Pour ce faire l'invention concerne un procédé de transmission selon la revendication 1

De la sorte, en supprimant une partie des motifs fixes, on libère de l'espace pour pouvoir insérer les données de remplacement. Ce remplacement permet alors de maintenir fixe le débit au niveau de la liaison.

En outre, dans le cas du multiplexage inverse, grâce au fait que les données de remplacement comprennent les données de supervision de transport de la trame dudit affluent, la cohérence du flux affluent en réception après multiplexage inverse est conservée. Au contraire, le document EP-A-1264383 susmentionné ne concerne pas le multiplexage inverse et ne permet pas de maintenir la cohérence du flux affluent en réception après multiplexage inverse.

La partie supprimée des motifs fixes correspond exactement à une quantité nécessaire pour l'insertion des données de remplacement, de sorte que le débit d'affluents est rigoureusement fixe au passage par la liaison.

Les données de remplacement sont alors adaptées en fonction du type de transmission de l'affluent.

L'invention exploite donc avantageusement les motifs fixes d'une trame SDH ou SONET en ajoutant des données de remplacement à un champ de motif fixe.

L'invention peut être appliquée à tout type de transmission au niveau d'une liaison, et notamment à un multiplexage par division temporelle, un multiplexage par division temporelle inverse, ou une régénération de signal.

Les données de remplacement correspondent aux données de supervision elles-mêmes. Ceci permet de rester compatible avec la norme SDH, malgré l'introduction de nouvelles données de supervision.

La réalisation est avantageusement mis en oeuvre dans le cas d'un multiplexage inverse.

La suppression de motifs fixes dans la zone de motifs fixes a également l'avantage de libérer de l'espace pour des données propriétaire liées par exemple aux services, tout en respectant les contraintes de débit.

Aux fins de la présente invention, on définit ainsi des données externes comme des données non comprises dans la trame traitée. De telles données externes se distinguent par exemple des données de supervision qui sont comprises dans la trame.

Dans ce cas, dans le procédé de l'invention, lesdites données de remplacement comprennent des données externes.

Afin d'être adapté au format SDH, dans le procédé susmentionné, ledit affluent comprenant au moins une trame au format SDH, et lesdits motifs fixes sont des mots de verrouillage.

Selon ce mode de réalisation, ce sont donc des mots de verrouillage qui sont supprimés. Les données de remplacement remplacent alors ces mots de verrouillage supprimés.

Par ailleurs, ladite transmission comprend une émission et une réception, et dans lequel, lors de la réception, on ré-insère des mots fixes au niveau desdites positions.

Ceci permet donc, à la réception, d'obtenir un affluent exactement identique à l'affluent transmis. La cohérence est donc garantie selon le procédé de l'invention.

Dans ce cas, lors de la réception, il est possible de ré-introduire lesdites données de remplacement dans la zone de données de supervision de transport.

Selon un mode de réalisation, le procédé comprend une étape d'introduction d'un retard, lesdites données de remplacement étant insérées après ledit retard introduit.

L'invention concerne également un dispositif pour la transmission selon la revendication 7.

Dès lors, selon cet aspect de l'invention, les motifs fixes sont eux-mêmes utilisés comme information d'ajustement de débit au passage par un dispositif de transmission notamment pour le multiplexage ou la régénération. En effet, selon cet aspect de l'invention, la suppression d'une partie des motifs fixes permet d'adapter le débit de l'affluent au dispositif de transmission en multiplexage ou régénération.

Selon cet aspect de l'invention, les motifs fixes sont supprimés sans être remplacés par d'autres données de sorte qu'il en résulte une diminution du débit.

Au contraire, dans le document EP-A-1264383 susmentionné, dans le cas du multiplexage, des motifs fixes sont supprimés mais remplacés par des motifs de même longueur à des emplacements utilisés momentanément à d'autres fins. Il en résulte donc un débit constant qui ne permet pas de s'adapter au débit du dispositif de transmission en multiplexage. En outre, dans le document susmentionné, la compatibilité avec le format SDH est un aspect essentiel alors que la suppression pure et simple de l'invention sans remplacement ne permet pas de maintenir cette compatibilité.

On décrit maintenant un mode de réalisation de l'invention en référence aux figures annexées dans lesquelles :
- FIG. 1 représente une trame au format SONET ;
- FIG. 2 et FIG. 3 représentent le schéma d'un mode de réalisation du procédé selon l'invention dans le cas d'un multiplexeur inverse.
- FIG. 4 et FIG. 5 représentent le schéma d'un mode de réalisation du procédé selon l'invention dans le cas d'un multiplexeur.

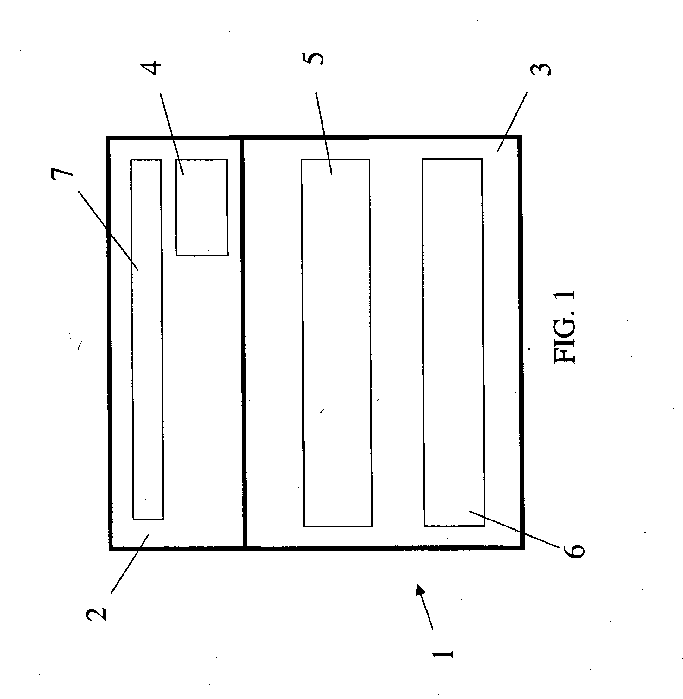

Illustré FIG. 1, une trame 1 au format SONET comprend une zone d'enveloppe de charge utile 3 et une zone de surdébit de transport 2. La zone d'enveloppe de charge utile 3 comprend une charge utile 5 et des données de supervision de charge utile 6 liées à la charge utile 5 de la trame 1. La zone de surdébit de transport 2 comprend des données de supervision de transport 4 liées au transport de la trame 1, et des motifs fixes 7 permettant le verrouillage de la trame 1 à la réception.

De façon connue en soi, les motifs fixes de la zone de motifs fixes 7 sont dénommés A1A2 dans le standard SONET, et les données de supervision de transport 4 sont dénommés B1-BlP8 dans le standard SONET.

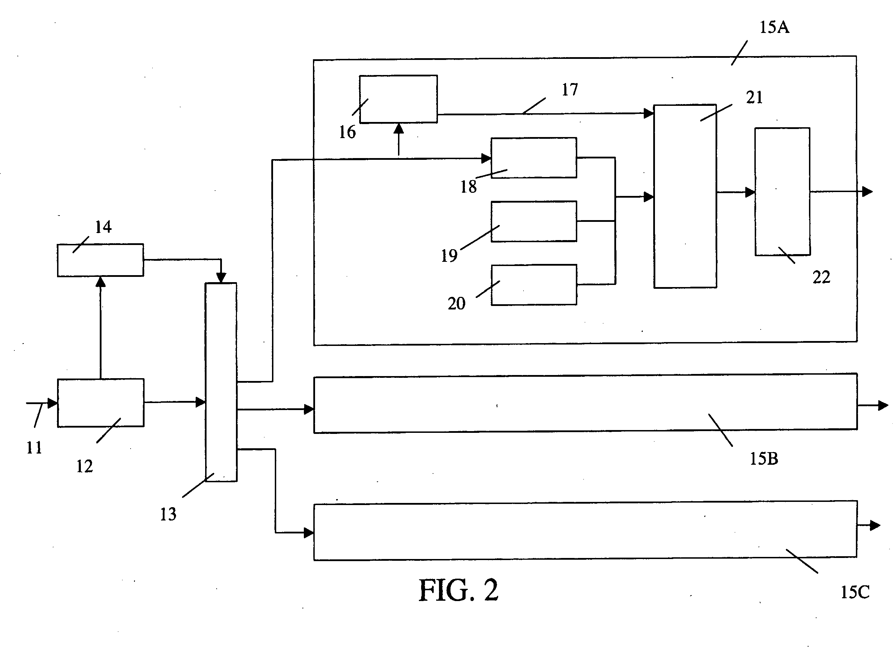

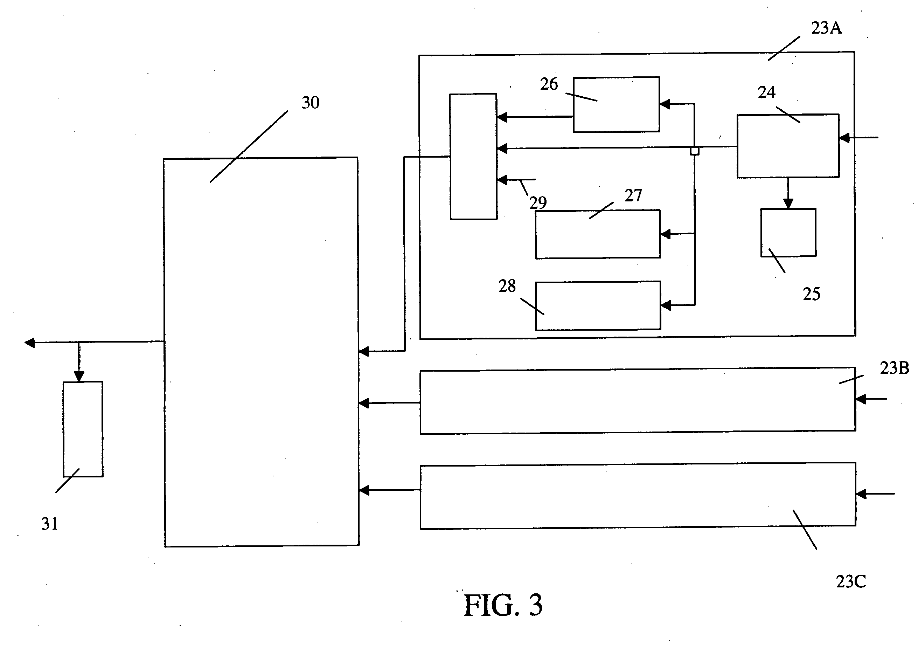

Les FIG. 2 et FIG. 3 illustrent un mode de réalisation du procédé objet de l'invention dans le cas d'une liaison par multiplexage inverse.

La FIG. 2 illustre un mode de réalisation du procédé objet de l'invention en émission dans le cas d'une liaison par multiplexage inverse.

Le procédé objet de l'invention est mis en oeuvre au niveau d'un noeud de multiplexage inverse de un affluent vers plusieurs canaux. Dans le cas du multiplexage inverse, selon l'invention, on remplace en émission, la partie surnuméraire des motifs fixes par des données de supervision de transport. Dans ce cas, les données de remplacement comprennent donc des données de supervision de la trame elle-même.

Une trame est reçue 11 au niveau d'un aligneur de trame 12. L'aligneur de trame 12 transmet la trame à un séparateur de trame 13, de façon synchronisée par l'intermédiaire d'une base de temps 14.

Le séparateur 13 sépare la trame sur plusieurs lignes de transmission. 15A, 15B, 15C.

On décrit le procédé mis en oeuvre au niveau de la ligne de transmission 15A, mais il est entendu qu'un procédé identique peut être mis en oeuvre au niveau de chaque ligne de transmission. Le procédé peut être mis en oeuvre de façon indépendante sur chaque ligne de sorte à permettre une supervision indépendante sur chaque ligne.

Au niveau de la ligne 15A, les données de supervision de transport initiales 4 de la trame sont stockées au niveau d'un bloc de stockage 16. Ces données de supervision de transport initiales 4 sont insérées 17 dans la zone de motifs fixes 7 de la trame. On insère également dans cette zone de motifs fixes 7, des données de contrôle de supervision 19, et de communication 20. Ces données sont des données externes à la trame. Les données de supervision sont insérées au niveau de la zone de motifs fixe 7 grâce à un retard introduit 18. Ce retard 18 a pour fonction de laisser défiler la trame de sorte à réaliser l'insertion du motif 17.

Au niveau du bloc 21, une trame comprenant les données de supervision initiales 4 au niveau de la zone de motifs fixe 7 est donc crée.

Pour cette trame, on calcule alors 22 les nouvelles données de supervision relatives à la nouvelle trame. Ces nouvelles données de supervision de transport remplacent les données de supervision de transport 4 dans la trame. Cette nouvelle trame est ensuite transmise vers le canal de transmission.

Les données de supervision de transport initiale 4 étant maintenant comprises dans la nouvelle trame au niveau de la zone de motifs fixes 7, ceci assure qu'il est possible de restituer la totalité des données de la trame. Ceci assure également l'égalité de la fréquence du train de trames d'origine.

La FIG. 3 illustre un mode de réalisation du procédé objet de l'invention en réception dans le cas d'une liaison par multiplexage inverse.

En réception, une trame arrive depuis une ligne de transmission dans des canaux de réception 23A, 23B, 23C. On décrit le procédé mis en oeuvre au niveau de la ligne de réception 23A, mais il est entendu qu'un procédé identique peut être mis en oeuvre au niveau de chaque ligne de réception.

La trame arrive au niveau d'un aligneur de trame 24, relié à une base de temps 25. Les données de supervision de transport initiales 4 sont extraites de la zone de motifs fixes 7 et sont stockées dans une zone de stockage 26. Les données de contrôle de supervision et de communication sont également extraites dans des blocs respectifs 27 et 28.

Les motifs fixes d'origine A1A2 sont réintroduits 29 dans la trame avec les données de supervision de transport initiales 4. Les données de supervision de transport 4 sont cette fois dans la zone de données de supervision de transport 4.

Les trames de chaque canal de réception sont ensuite réalignées dans un tampon de réalignement 30. Suite à ce réalignement, l'affluent obtenu est identique à l'affluent d'origine.

Un bloc de vérification 31 peut également être introduit suite au réalignement afin de vérifier la conformité des données de supervision ainsi obtenue avec les données de supervision initiales 4.

Dans le cas d'une trame de type SDH, les mots fixes sont en grand nombre, par exemple 384 octets pour une transmission STM 64. Il est par ailleurs possible de considérer que quatre octets de mots de verrouillage sont suffisants pour obtenir une bonne immunité à fort taux d'erreur. Ainsi, il reste 380 octets exploitables dans la zone de motifs fixes. Selon l'invention, ces octets sont donc utilisés pour stocker les données de supervision de transport. Dans le cas d'une transmission STM 4, 92 octets sont disponibles, et le procédé précédemment décrit peut également être mis en oeuvre.

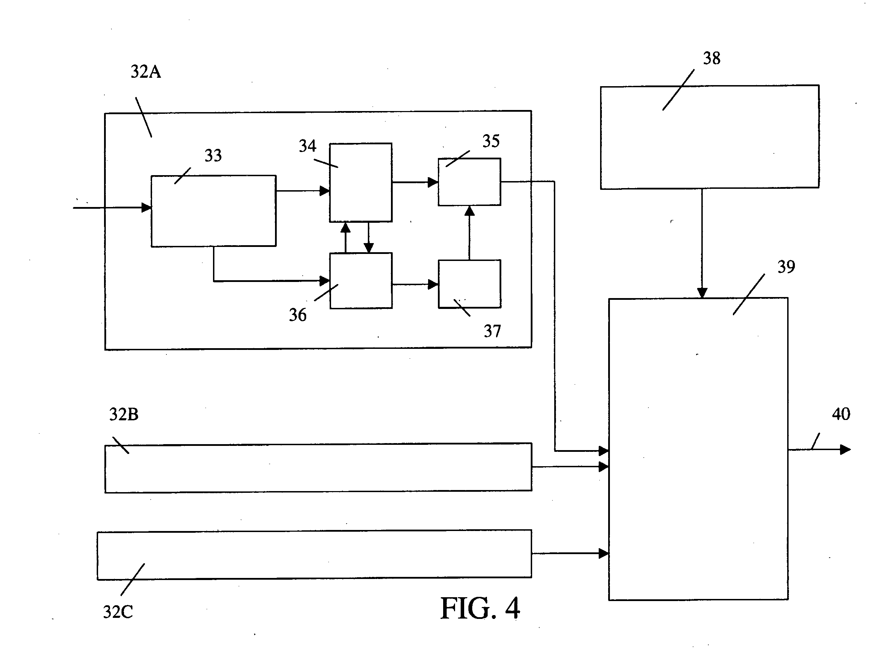

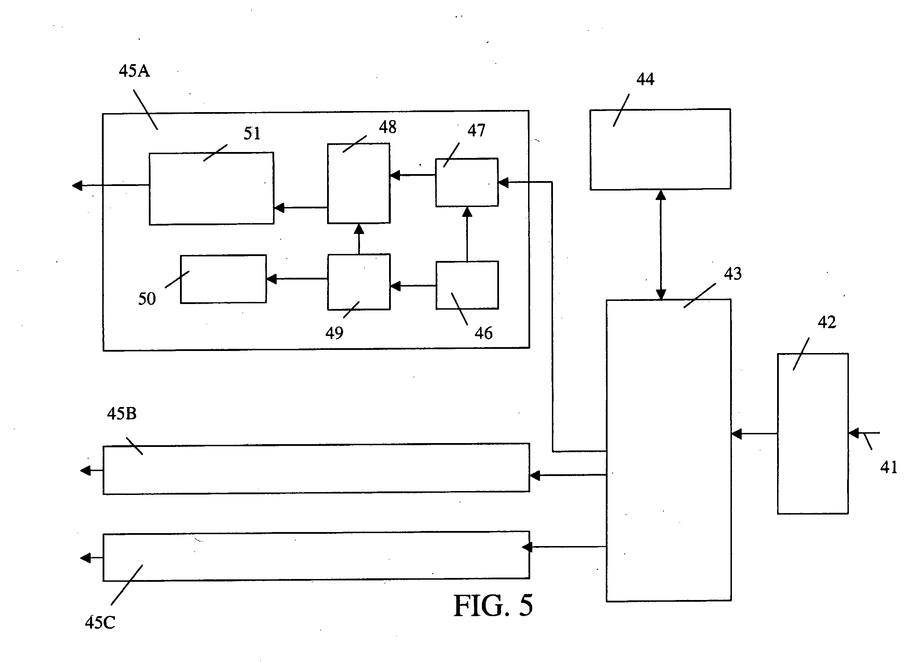

En référence aux figures 4 et 5 , on décrit maintenant un procédé selon l'invention dans le cas d'un multiplexage. Dans le cas du multiplexage transparent de plusieurs trains SDH qui habituellement s'effectue par le passage dans un conteneur de débit plus important, on détruit les mots fixes surnuméraires des trames SDH des affluents afin de libérer du débit en vue de créer une nouvelle trame de débit strictement multiple du débit des affluents. Les données insérées sont notamment des données de supervision de transport ainsi que des données ayant trait à la synchronisation des affluents sur le même rythme par le procédé de justification.

Illustré FIG. 4, on décrit un mode de réalisation de l'invention dans le cas d'une liaison par multiplexage en émission.

Des trames arrivent au niveau des lignes 32A, 32B, 32C. On décrit la mise en oeuvre du procédé selon l'invention au niveau de la ligne 32A, mais il est entendu qu'un procédé identique peut être mis en oeuvre au niveau des lignes 32B et 32C.

Un aligneur de trame 33 permet de supprimer des motifs fixes de la zone de motifs fixes 7 de la trame. Le nombre de motifs fixes supprimés permet toutefois de maintenir une bonne immunité à fort taux d'erreur comme décrit précédemment.

Une mémoire tampon 34 permet de stocker les données du train de débit inférieur résultant de cette suppression.

Un dispositif de lecture de la mémoire permet d'insérer, au milieu des données lues et en des positions définies par la base de temps 37, des données relatives à la synchronisation par mise en oeuvre du procédé de justification.

Ce procédé utilise les indications de remplissage et de vidage de la mémoire, délivrées par le comparateur de phase 36 entre les pointeurs de lecture et d'écriture de la mémoire.

Ces indications interviennent sur le nombre de bourrages insérés par la base de temps 37 afin de réguler le centrage de la mémoire.

La constitution du nouveau train s'effectue en utilisant le rythme du bloc de multiplexage 39 ce qui a pour effet de rendre synchrones chacun des flux sortant des blocs 35 des lignes 32A, 32B et 32C et ainsi de les rendre aptes au multiplexage.

Des données de supervision sont ajoutées à la trame au niveau de la zone de motifs fixes. Ces données de supervision replacent 38. donc, selon l'invention, les motifs fixes précédemment supprimés. Les données ajoutées peuvent également comprendre des données de canaux de communication et des données de contrôle.

Un relais de trame 39 permet alors le multiplexage des trames ainsi générées, L'affluent ainsi obtenu est transmis 40 vers le canal de transmission.

La FIG. 5 illustre un mode de réalisation de l'invention dans le cas d'un multiplexage en réception. En réception, les données ajoutées en émission sont exploitées, et sont ensuite détruites et remplacées par le motif fixe d'origine de sorte à recomposer le train d'origine.

Ainsi, lors de la réception 41 d'un affluent, on réalise un alignement de trames 42. Un élément de démultiplexage 43 réalise alors le démultiplexage des trames vers plusieurs lignes 45A, 45B, 45C. À ce stade, les données de supervision de transport ajoutées sont exploitées 44. Elles sont ensuite supprimées.

Le contenu de chaque conteneur multiplexé à l'émission est observé par le bloc 47 afin d'en extraire les données ayant trait à la synchronisation afin de rétablir un nombre de bourrages de base de temps identique à ceux introduits en émission (procédé de déjustification) ainsi que des données de supervision propre à l'affluent.

Les positions de ces extractions sont indiquées au dé-mapper par la base de temps 46. Cette base de temps permet également la génération de signaux de blocage d'écriture dans la mémoire tampon 48 afin de restituer un train de débit inférieur à celui transmis en ligne et dont le contenu est identique à l'affluent d'origine moins les motifs fixes qui en avaient été soustraits à l'émission.

La relecture, par le bloc 51, du contenu de la mémoire et la re-inscription dans le flux de données à leur place initiale et en nombre identique des motifs fixes A1A2, redonne au train son contenu d'origine.

Le bloc 50 permet quant à lui de restituer le rythme au moyen d'une boucle à verrouillage de phase utilisant comme horloge de référence l'horloge trouée d'écriture dans la mémoire tampon.

Le train ainsi restitué est donc équivalent en contenu et en rythme à celui d'origine.

Les motifs fixes d'origine A1A2 préalablement supprimées sont alors réintégrés dans la trame de sorte à recomposer le train d'origine.

On décrit maintenant un autre aspect de l'invention, notamment dans le cas du multiplexage ou de la régénération comme mentionné ci-dessus.

Selon cet aspect, l'invention se rapporte à un procédé de transmission d'au moins un affluent en mode synchrone au niveau d'une liaison d'un réseau de données, ledit affluent comprenant au moins une trame 1, ladite trame comprenant au moins une zone d'enveloppe de charge utile 3 et une zone de surdébit de transport 2, ladite.zone d'enveloppe de charge utile 3 comprenant au moins une charge utile 5 et des données de supervision de charge liées à la charge utile 6, ladite zone de surdébit de transport comprenant au moins des données de supervision de transport 4 liées au transport et une zone de motifs fixes 7 comprenant des motifs fixes, ledit procédé comprenant des étapes de:
- modification de ladite trame de sorte à générer une trame modifiée;
- transmission de ladite trame modifiée, la modification comprenant au moins une étape dans laquelle :
- on supprime une partie desdits motifs fixes dans ladite zone de motifs fixe de sorte à diminuer le débit de l'affluent.

Selon cet aspect de l'invention, les motifs fixes sont eux-mêmes utilisés comme information d'ajustement de débit au passage par un dispositif de transmission notamment pour le multiplexage ou la régénération. En effet, selon cet aspect de l'invention, la suppression d'une partie des motifs fixes permet d'adapter le débit de l'affluent au dispositif de transmission en multiplexage ou régénération.

Selon cet aspect de l'invention, les motifs fixes sont supprimés sans être remplacés par d'autres données de sorte qu'il en résulte une diminution du débit.

Dans ce cas, la suppression pure et simple des motifs fixes ne permet pas de maintenir la compatibilité avec le protocole SDH.

Dès lors, l'agrégation de N affluents incidents par exemple de type OC48 se fera, après la modification susmentionnée par suppression de certains motifs de sorte à obtenir un format non SDH, au moyen d'un dispositif de multiplexage indépendant non conforme à la norme SDH gérant l'adaptation de débit par exemple par justification.

Selon cet aspect de l'invention, la suppression de certains motifs fixes permet une diminution du débit de l'affluent. Dès lors, il est possible d'adapter le débit des N affluents à celui du multiplexeur par des suppressions ou des insertions des motifs A1A2. Si leur débit est plus important que celui du multiplexeur, une suppression pure et simple des motifs A1A2 permet une diminution du débit et permet donc une adaptation au débit du multiplexeur. Au contraire, si leur débit est inférieur à celui du multiplexeur, il est également possible d'insérer des motifs A1A2.

En réception, on restitue le train d'origine en s'assurant, avant de sortir l'affluent du système, qu'il a été reconstitué avec le nombre adéquat de motifs. Ainsi, après le transport, et le décapsulage des trains OC48 amputés de certains motifs A1A2, ces motifs sont réinsérés dans la trame.

## Revendications

1. Procédé de transmission d'au moins un affluent en mode synchrone au niveau d'une liaison d'un réseau de données, ledit affluent comprenant au moins une trame (1) au format SDH ou SONET, ladite trame comprenant au moins une zone d'enveloppe de charge utile (3) et une zone de surdébit de transport (2), ladite zone d'enveloppe de charge utile (3) comprenant au moins une charge utile (5) et des données de supervision de charge liées à la charge utile (6), ladite zone de surdébit de transport comprenant au moins des données de supervision de transport (4) liées au transport et une zone de motifs fixes (7) comprenant des motifs fixes, ledit procédé comprenant des étapes de :
• modification de ladite trame de sorte à générer une trame modifiée;
• transmission de ladite trame modifiée,
la modification comprenant des étapes dans lesquelles :
• on supprime une partie desdits motifs fixes dans ladite zone de motifs fixe ;
• on enregistre les positions de ladite partie des motifs fixes supprimés ;
• on insère des données de remplacement au niveau desdites positions, lesdites données de remplacement comprenant les données de supervision de transport de la trame dudit affluent,
ledit procédé comprend en outre des étapes dans lesquelles :
• on stocke lesdites données de supervision de transport avant de les insérer dans les données de remplacement ;
• postérieurement à l'étape de stockage, on remplace lesdites données de supervision de transport dans la zone de données de supervision de transport par des nouvelles données de supervision de transport correspondant à la trame modifiée.

2. Procédé selon la revendication 1 dans lequel lesdites données comprennent des données externes.

3. Procédé selon la revendication 2 dans lequel lesdites données externes comprennent des données réalisant au moins une fonction parmi les fonctions de détection d'erreur, de contrôle distant, de canaux de communication et de synchronisation.

4. Procédé selon l'une des revendications précédentes, dans lequel ladite transmission comprend une émission et une réception, et dans lequel, lors de la réception, on réinsère des mots fixes au niveau desdites positions.

5. Procédé selon la revendication 4 dans lequel, lors de la réception, on réintroduit lesdites données de remplacement dans la zone de données de supervision de transport.

6. Procédé selon l'une des revendications précédentes comprenant une étape d'introduction d'un retard (18), lesdites données de remplacement étant insérée après ledit retard introduit.

7. Dispositif pour la transmission d'au moins un affluent en mode synchrone au niveau d'une liaison d'un réseau de données, ledit affluent comprenant au moins une trame (1) au format SDH ou SONET, ladite trame comprenant au moins une zone d'enveloppe de charge utile (3) et une zone de surdébit de transport (2), ladite zone d'enveloppe de charge utile (3) comprenant au moins une charge utile (5) et des données de supervision de charge liées la charge utile (6), ladite zone de surdébit de transport comprenant au moins des données de supervision de transport (4) liées au transport et une zone de motifs fixes (7) comprenant des motifs fixes, ledit dispositif comprenant :
• des moyens de modification de ladite trame de sorte générer une trame modifiée;
• des moyens de transmission de ladite trame modifiée,
• des moyens pour supprimer une partie desdits motifs fixes dans ladite zone de motifs fixe ;
• des moyens pour enregistrer les positions de ladite partie des motifs fixes supprimés ;
• des moyens pour insérer des données de remplacement au niveau desdites positions,
lesdits moyens de modification sont agencés pour que lesdites données de remplacement comprennent lesdites données de supervision de transport de la trame dudit affluent, le dispositif comprend en outre
• des moyens pour stocker lesdites données de supervision de transport avant de les insérer dans les données de remplacement, de telle sorte que postérieurement au stockage, lesdites données de supervision de transport dans la zone de données de supervision de transport sont remplacées par des nouvelles données de supervision de transport correspondant à la trame modifiée.

## Patentansprüche

1. Verfahren zur Übertragung mindestens eines Nebenelements im Synchronmodus auf der Ebene einer Verknüpfung eines Datennetzwerks, wobei das Nebenelement mindestens einen Raster (1) im Format SDH oder SONET umfasst, wobei der Raster mindestens eine Nutzlasthüllenzone (3) und eine Transportoverheadzone (2) umfasst, wobei die Nutzlasthüllenzone (3) mindestens eine Nutzlast (5) und Lastsupervisionsdaten, die mit der Nutzlast (6) verbunden sind, umfasst, wobei die Transportoverheadzone mindestens Transportsupervisionsdaten (4) umfasst, die mit dem Transport verbunden sind, und wobei eine Festmotivzone (7) feste Motive umfasst, wobei das Verfahren die folgenden Schritte umfasst:
• Modifikation des Rasters, um einen modifizierten Raster zu bilden;
• Übertragung des modifizierten Rasters;
wobei die Modifikation Schritte umfasst, in denen:
• ein Teil der festen Motive in der Festmotivzone weggelassen wird;
• die Positionen des Teils der weggelassenen festen Motive aufgezeichnet werden;
• Ersatzdaten auf der Ebene der Positionen eingesetzt werden, wobei die Ersatzdaten die Transportsupervisionsdaten des Rasters des Nebenelements umfassen,
wobei das Verfahren ferner die folgenden Schritte umfasst:
• Speichern der Transportsupervisionsdaten, bevor sie in die Ersatzdaten eingesetzt werden;
• nach dem Speicherschritt Ersatz der Transportsupervisionsdaten in der Transportsupervisionsdatenzone durch neue Transportsupervisionsdaten entsprechend dem modifizierten Raster.

2. Verfahren nach Anspruch 1, bei dem die Daten externe Daten umfassen.

3. Verfahren nach Anspruch 2, bei dem die externen Daten Daten umfassen, die mindestens eine Funktion unter den Funktionen der Fehlererfassung, der Fernkontrolle, von Kommunikations- und Synchronisationskanälen erfüllen.

4. Verfahren nach einem der vorhergehenden Ansprüche, bei dem die Übertragung ein Senden und ein Empfangen umfasst, und bei dem beim Empfangen feste Motive auf der Ebene der Positionen wieder eingesetzt werden.

5. Verfahren nach Anspruch 4, bei dem beim Empfangen die Ersatzdaten wieder in die Transportsupervisionsdatenzone eingeführt werden.

6. Verfahren nach einem der vorhergehenden Ansprüche, umfassend einen Schritt der Einführung einer Verzögerung (18), wobei die Ersatzdaten nach der eingeführten Verzögerung eingesetzt werden.

7. Vorrichtung für die Übertragung mindestens eines Nebenelements im Synchronmodus auf der Ebene einer Verknüpfung eines Datennetzwerks, wobei das Nebenelement mindestens einen Raster (1) im Format SDH oder SONET umfasst, wobei der Raster mindestens eine Nutzlasthüllenzone (3) und eine Transportoverheadzone (2) umfasst, wobei die Nutzlasthüllenzone (3) mindestens eine Nutzlast (5) und Lastsupervisionsdaten, die mit der Nutzlast (6) verbunden sind, umfasst, wobei die Transportoverheadzone mindestens Transportsupervisionsdaten (4) umfasst, die mit dem Transport verbunden sind, und wobei eine Festmotivzone (7) feste Motive umfasst, wobei die Vorrichtung umfasst:
• Mittel zur Modifikation des Rasters, um einen modifizierten Raster zu bilden;
• Mittel zur Übertragung des modifizierten Rasters;
• Mittel, um einen Teil der festen Motive in der Festmotivzone wegzulassen;
• Mittel, um die Positionen des Teils der weggelassenen festen Motive aufzuzeichnen;
• Mittel, um Ersatzdaten auf der Ebene der Positionen einzusetzen,
wobei die Modifikationsmittel derart angeordnet sind, dass die Ersatzdaten die Transportsupervisionsdaten des Rasters des Nebenelements umfassen, wobei die Vorrichtung ferner umfasst:
• Mittel zum Speichern der Transportsupervisionsdaten, bevor sie in die Ersatzdaten eingesetzt werden, so dass nach dem Speichern die Transportsupervisionsdaten in der Transportsupervisionsdatenzone durch neue Transportsupervisionsdaten entsprechend dem modifizierten Raster ersetzt werden.

## Claims

1. Method for transmitting at least one tributary in synchronous mode at the level of a link of a data network, said tributary comprising at least one frame (1) in the SDH or SONET format, said frame comprising at least one payload envelope area (3) and one transport overhead area (2), said payload envelope area (3) comprising at least one payload (5) and load supervision data linked to the payload (6), said transport overhead area comprising at least transport supervision data (4) linked to the transport and an area of fixed patterns (7) comprising fixed patterns, said method comprising steps of:
• modification of said frame so as to generate a modified frame;
• transmission of said modified frame,
the modification comprising steps in which:
• a part of said fixed pattern is deleted in said area of fixed patterns;
• the positions of said part of the deleted fixed patterns are recorded;
• replacement data are inserted at said positions, said replacement data comprising transport supervision data for said tributary frame,
said method further comprising steps in which:
• said transport supervision data are stored before they are inserted into the replacement data;
• after the storage step, said transport supervision data are replaced in the transport supervision data area by new transport supervision data corresponding to the modified frame.

2. Method according to Claim 1, in which said data comprise external data.

3. Method according to Claim 2, in which said external data comprise data performing at least one function out of the error detection, remote control, communication channel and synchronization functions.

4. Method according to one of the preceding claims, in which said transmission comprises a transmission and a reception, and in which, upon the reception, fixed words are reinserted at said positions.

5. Method according to Claim 4, in which, upon the reception, said replacement data are reintroduced into the transport supervision data area.

6. Method according to one of the preceding claims, comprising a step of introduction of a delay (18), said replacement data being inserted after said introduced delay.

7. Device for transmitting at least one tributary in synchronous mode at the level of a link of a data network, said tributary comprising at least one frame (1) in the SDH or SONET format, said frame comprising at least one payload envelope area (3) and one transport overhead area (2), said payload envelope area (3) comprising at least one payload (5) and load supervision data linked to the payload (6), said transport overhead area comprising at least transport supervision data (4) linked to the transport and an area of fixed patterns (7) comprising fixed patterns, said device comprising:
• means for modifying said frame so as to generate a modified frame;
• means for transmitting said modified frame,
• means for deleting a part of said fixed patterns in said area of fixed patterns;
• means for recording the positions of said part of the deleted fixed patterns;
• means for inserting replacement data at said positions,
said modification means are arranged so that said replacement data comprise said transport supervision data of the frame of said tributary, the device further comprises
• means for storing said transport supervision data before they are inserted into the replacement data, such that, after the storage, said transport supervision data in the transport supervision data area are replaced by new transport supervision data corresponding to the modified frame.
